# EUROPÄISCHE PATENTANMELDUNG

(11) **EP 1 783 030 A1**
(43) Veröffentlichungstag der Anmeldung: **09.05.2007**
(21) Anmeldenummer: 06019831.4
(22) Anmeldetag: 22.09.2006
(51) Int. Cl.: B62D 1/10

(54) **Baugruppe für ein Lenksystem eines Kraftfahrzeugs**

(30) Priorität: 03.11.2005 DE 102005053183
(71) Anmelder: Valeo Schalter und Sensoren GmbH, 74321 Bietigheim-Bissingen (DE)
(72) Erfinder: Ruetz, Christian, 71636 Ludwigsburg (DE)
(74) Vertreter: Thielking, Klaus

(57) **Zusammenfassung**

Die Erfindung betrifft eine Baugruppe für ein Lenksystem eines Kraftfahrzeugs, mit einem fahrzeugfesten Träger (38), an dem eine Lenkradnabe (70) eines Lenkrads (30) drehbar gelagert ist, wobei zur Lagerung der Lenkradnabe (70) des Lenkrads (30) an dem Träger (38) ein Rotorelement (4) vorgesehen ist.

## Beschreibung

Die Erfindung betrifft eine Baugruppe für ein Lenksystem eines Kraftfahrzeugs, mit einem fahrzeugfesten Träger, an dem eine Lenkradnabe eines Lenkrads drehbar gelagert ist.

Eine solche Baugruppe ist aus der US 3,744,817 bekannt. Bei der dort offenbarten Baugruppe werden Kugellager oder Kegelrollenlager verwendet, damit sich das Lenkrad leichtgängig um den ortsfesten Träger drehen lässt.

Der vorliegenden Erfindung liegt die Aufgabe zugrunde, eine Baugruppe für ein Lenksystem eines Kraftfahrzeugs zu schaffen, die sich besonders einfach montieren lässt.

Diese Aufgabe wird erfindungsgemäß dadurch gelöst, dass zur Lagerung der Lenkradnabe des Lenkrads an dem Träger ein Rotorelement vorgesehen ist. Mit dem Rotorelement wird erreicht, dass sich die Baugruppe besonders flexibel montieren lässt. So kann das Rotorelement nicht nur zur Aufnahme des Lenkrads dienen, sondern auch zur Aufnahme weiterer Bauteile, wie dies im Folgenden beschrieben ist.

Die Aufnahme weiterer Bauteile wird insbesondere dann erleichtert, wenn das Rotorelement im Wesentlichen hülsenartig ausgebildet ist. Das hülsenartige Rotorelement kann beispielsweise zur Anordnung eines elastischen Elements dienen. Das Rotorelement und die Lenkradnabe des Lenkrads können so miteinander verbunden sind, dass ein Drehwinkelversatz zwischen dem Rotorelement und der Lenkradnabe des Lenkrads ermöglicht ist. Ein solches elastisches Element ist in der zeitgleich eingereichten deutschen Patentanmeldung "Vorrichtung für ein Lenksystem eines Kraftfahrzeugs" (Aktenzeichen: 10 2005 053 181.4) derselben Anmelderin beschrieben. Auf die Offenbarung dieser Anmeldung wird hiermit Bezug genommen.

Das Rotorelement kann auch zur Aufnahme eines Getriebeelements, beispielsweise eines Zahnrads ausgebildet sein, das Teil eines Getriebes zur Übertragung der Drehbewegung des Lenkrads auf eine Lenkwelle ist. Je mehr Bauteile das Rotorelement aufnehmen kann, desto komplexer und größer kann die Vormontagegruppe sein, die einem Kraftfahrzeug bei der Endmontage zur Verfügung gestellt werden kann. Dies ermöglicht es, diese komplexen Vormontagegruppen einer umfassenden Qualitätskontrolle zu unterziehen, insbesondere die einzelnen Funktionen der Vormontagegruppe genau prüfen zu können. Bei der Endmontage des Kraftfahrzeugs und der anschließenden Endkontrolle kann dann Zeit eingespart werden.

Gemäß einer vorteilhaften Weiterbildung der Erfindung ist das Lenkrad und/oder die Lenkradnabe drehfest mit einem ersten Kodierelement verbunden, das Teil einer Drehwinkelsensoranordnung und/oder Drehmomentsensoranordnung ist. In entsprechender Weise kann das Rotorelement zur Aufnahme eines zweiten Kodierelements ausgebildet sein, das Teil einer Drehwinkelsensoranordnung und/oder Drehmomentsensoranordnung ist. Diese Anordnung der Kodierelemente ermöglicht eine platzsparende Integration eines Drehwinkelsensors und/oder eines Drehmomentsensors in eine lenkradnahe Baugruppe. Dies ist auch in der zeitgleich eingereichten deutschen Patentanmeldung derselben Anmelderin mit dem Titel "Vorrichtung zur Anordnung in einem Lenksystem eines Kraftfahrzeugs" (Aktenzeichen: DE 10 2005 053 180.6) beschrieben. Auf die Offenbarung dieser Anmeldung wird hiermit Bezug genommen.

Eine vorteilhafte Weiterbildung der Erfindung sieht vor, dass an dem Träger eine Airbageinheit so befestigt ist, dass sie von dem Lenkrad drehentkoppelt ist. Dies hat den Vorteil, dass die Airbageinheit feststehen kann, so dass sie nicht rotationssymmetrisch ausgebildet sein muss, um bei einem Unfall optimal wirken zu können. Eine feststehende oder "statische" Airbageinheit hat auch den Vorteil, dass die Verwendung einer Wickelfeder für die elektrische Kontaktierung der Airbageinheit nicht erforderlich ist. Durch eine feststehende elektrische Kontaktierung, die beispielsweise Stecker und Leitungen umfasst, ist die Airbageinheit besonders betriebssicher.

Wenn die Airbageinheit eine Halteplatte zur Anordnung des Airbags aufweist, der einen Durchbruch für ein freies Ende des Trägers aufweist, kann die Airbageinheit in besonders einfacher Art und Weise an dem fahrzeugfesten Träger befestigt werden, beispielsweise durch Aufpressen.

Die erfindungsgemäße Baugruppe kann eine Lenkstockschaltereinheit umfassen, die mindestens einen Lenkstockschalter und ein Schaltergehäuse aufweist. Durch die Integration dieser Bauteile kann die Komplexität der Baugruppe erhöht werden, so dass die Endmontage des Kraftfahrzeugs erleichtert wird.

Das Schaltergehäuse kann auch zur Aufnahme einer Steuerplatine und/oder einer Wickelfeder ausgebildet sein. Dies ist auch in der oben genannten Anmeldung "Vorrichtung für ein Lenksystem eines Kraftfahrzeugs" beschrieben.

Das Schaltergehäuse und/oder die Steuerplatine können zur Aufnahme von ortsfesten Sensoren eines Drehmomentsensors und/oder eines Drehwinkelsensors ausgebildet sein.

Das Schaltergehäuse kann an einem karosseriefesten Bauteil positioniert und gleichzeitig gegen Verdrehen gesichert sein. Hierdurch ist die Montage des Schaltergehäuses besonders einfach. Das Schaltergehäuse kann aber auch zumindest mittelbar durch das Rotorelement und/oder durch die Lenkradnabe und/oder durch das Lenkrad positioniert sein und an einem karosseriefesten Bauteil gegen Verdrehen gesichert sein. Auf diese Weise lässt sich das Schaltergehäuse innerhalb enger Toleranzen relativ zu dem Rotorelement und/oder der Lenkradnabe und/oder dem Lenkrad positionieren, so dass insbesondere die präzise Anordnung von Kodierelementen von Drehmomentsensoren und/oder Drehwinkelsensoren erleichtert wird. Dabei kann das karosseriefeste Bauteil beispielsweise durch den Träger und/oder durch ein die Lenkwelle umgebendes Mantelrohr gebildet sein.

Die Baugruppe kann auch einen Antrieb umfassen, der das Rotorelement antreibt. Mit Hilfe eines solchen Antriebs ist es beispielsweise möglich, den Widerstand, mit dem sich das Lenkrad drehen lässt, zu verändern, so dass dem Fahrer des Kraftfahrzeugs eine Rückmeldung über bestimmte dynamische Zustände des Kraftfahrzeugs gegeben werden kann. Es ist auch möglich, dass der Antrieb die Bewegung des Lenkrads in einem von einem Fahrerassistenzsystem vorgeschlagene Richtung durchführt oder unterstützt.

Die Baugruppe kann für ein konventionelles Lenksystem verwendet werden, bei dem die Bewegung des Lenkrads mechanisch auf die Bewegung einer Lenkwelle übertragen wird. Die Baugruppe kann aber auch für ein Steer-By-Wire-Lenksystem vorgesehen sein.

Die Erfindung betrifft auch verschiedene Verfahren zur Montage einer Baugruppe für ein Lenksystem eines Kraftfahrzeugs.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im Einzelnen beschrieben ist. Dabei können die in der Zeichnung gezeigten sowie in den Ansprüchen sowie in der Beschreibung erwähnten Merkmale jeweils einzeln für sich oder in beliebiger Kombination erfindungswesentlich sein.

In der Zeichnung zeigen:
- Figur 1: eine perspektivische Ansicht einer erfindungsgemäßen Baugruppe in einem Vormontagezustand;
- Figur 2: einen Ausschnitt der erfindungsgemäßen Baugruppe in einem fertigen Montagezustand; und
- Figuren 3 und 4: Detailansichten der Baugruppe.

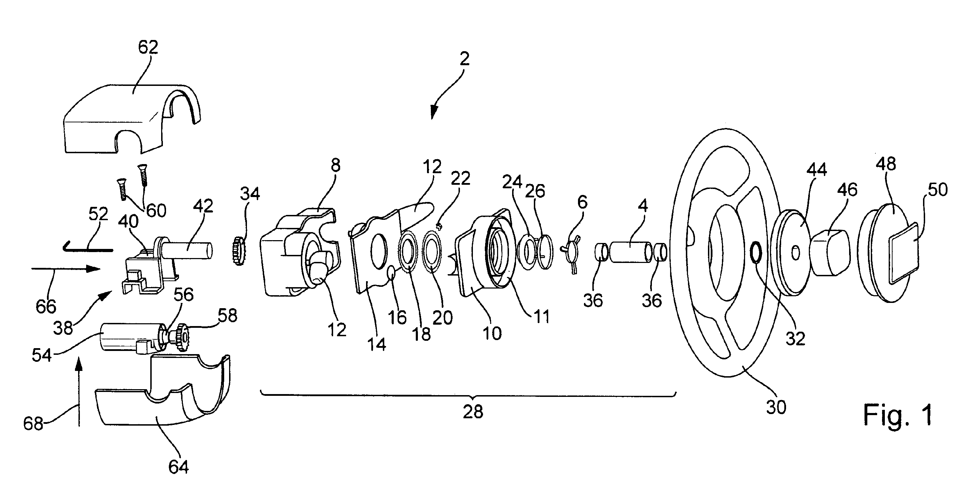

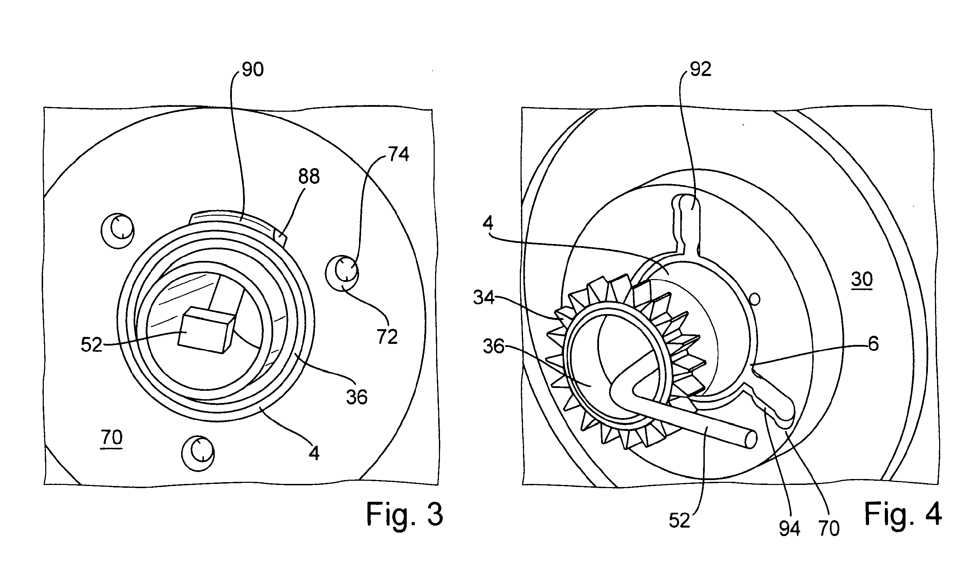

In Figur 1 ist eine erfindungsgemäße Baugruppe insgesamt mit dem Bezugszeichen 2 bezeichnet. Diese umfasst ein hohlzylindrisches Rotorelement 4. Das Rotorelement 4 lässt sich drehfest mit einem elastischen Element 6 verbinden, das im Detail noch mit Bezug auf Figur 4 erläutert werden wird.

Linker Hand des elastischen Elements 6 sind das Unterteil 8 und das Oberteil 10 eines Schaltergehäuses dargestellt. Das Oberteil 10 des Schaltergehäuses weist, dem Unterteil 8 des Schaltergehäuses abgewandt, einen ringförmigen Raum 11 für eine nicht dargestellte Wickelfeder auf. Das Schaltergehäuse dient unter anderem zur Aufnahme von zwei Lenkstockschaltern 12. In das Unterteil 8 des Schaltergehäuses 8 lässt sich eine Steuerplatine 14 einsetzen, die wiederum zur Anordnung eines Umdrehungssensors 16 dient. Mit dem Sensor 16 kann die Anzahl der vollen Lenkraddrehungen eines Lenkrads 30 erfasst werden.

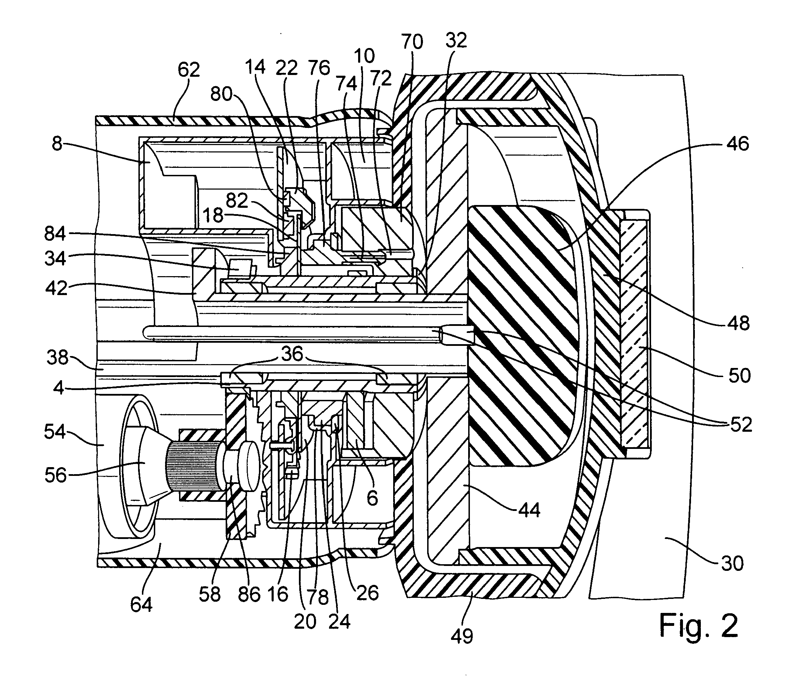

Innerhalb des Schaltergehäuses lässt sich auch ein zweites Kodierelement 18 anordnen, das Teil eines Drehmomentsensors ist. Parallel zum zweiten Kodierelement 18 kann ein erstes Kodierelement 20 angeordnet werden, das Teil eines Drehwinkelsensors ist. Den Kodierelementen 18 und 20 ist ein lichtleitendes Element 22 zugeordnet, dessen Funktion mit Bezug auf Figur 2 noch beschrieben werden wird.

Das erste Kodierelement 20 ist an einem rechter Hand des Oberteils 10 des Schaltergehäuses dargestellten Haltering 24 befestigt. Zur Positionierung des Halterings 24 an dem Oberteil 10 des Schaltergehäuses ist ein Lagerring 26 vorgesehen.

Die Bauteile 8 bis 26 bilden eine Montagegruppe 28, die auf das Rotorelement 4 aufgeschoben werden kann. In entsprechender Weise kann das Lenkrad 30 auf das Rotorelement 4 aufgesetzt werden, wo es drehbar auf dem Rotorelement 4 gelagert ist und in axialer Richtung mit Hilfe eines Sicherungsrings 32 gesichert werden kann. Wenn die Montagegruppe 28 auf dem Rotorelement 4 angeordnet ist, kann ein als Zahnrad ausgebildetes Getriebeelement 34 auf das Rotorelement 4 aufgesetzt und drehfest mit diesem verbunden werden.

Die solchermaßen gebildete Baugruppe, die alle bisher genannten Teile 4 bis 34 umfasst, kann mit dem Rotorelement 4 und mit Hilfe von zwei Rollenlagern 36 auf einen karosseriefesten Träger 38 aufgesetzt werden. Der Träger 38 weist einen Sockelbereich 40 sowie einen zylindrischen Abschnitt 42 auf. Dieser ist so dimensioniert, dass die Rollenlager 36 auf diesem angeordnet werden können, so dass das Rotorelement 4 drehbar auf dem Abschnitt 42 gelagert ist.

Der Zylinderabschnitt 42 ist so lang, dass auf dessen freies Ende, das das Lenkrad 30 durchgreift, eine Halteplatte 44 aufgesetzt und drehfest mit dem zylindrischen Abschnitt 42 verbunden werden kann. An der Halteplatte 44 ist ein Airbag 46 angeordnet, der, wie die Halteplatte 44 und der zylindrische Abschnitt 42 sowie der Träger 38, nicht mit dem Lenkrad 30 drehgekoppelt ist, also feststeht. Der Airbag 46 ist von einer Abdeckung 48 abgedeckt, die ebenfalls nicht mit dem Lenkrad 30 mitdreht, so dass ein auf der Abdeckung 48 angeordneter Bildschirm 50 auch bei Drehung des Lenkrads 30 in der in Figur 1 dargestellten Lage verbleibt.

Alternativ zu der beschriebenen Anordnung kann die Abdeckung 48 nicht mit der Halteplatte 44, sondern mit dem Lenkrad 30 (bspw. mit dem ringförmigen Grundkörper 49 des Lenkrads 30) verbunden sein. Hierdurch dreht sich die Abdeckung 48 gemeinsam mit dem Lenkrad. Auf der Abdeckung 48 können Bedienelemente wie Schalter, Rändelräder etc. angeordnet werden, die sich dann - ergonomisch vorteilhaft - zusammen mit der Abdeckung 48 mitdrehen. Die Bedienelemente können mit Hilfe der o.g. Wickelfeder elektrisch kontaktiert werden.

Der Airbag 46 kann mit Hilfe einer elektrischen Kontaktierung 52 kontaktiert werden, die den hohlzylindrischen Abschnitt 42 durchgreift.

Der Träger 38 kann mit seinem Sockelbereich 40 auf komplementär ausgebildete Aufnahmen an einem fahrzeugfesten Mantelrohr 54 aufgesetzt werden. Das Mantelrohr 54 dient zur Lagerung einer Lenkwelle 56, das an seinem freien Ende ein Zahnrad 58 aufweist, das zum kämmenden Eingriff mit dem Getriebeelement 34 ausgebildet ist. Der Träger 38 kann mit Hilfe von zwei Befestigungselementen 60, die den Sockelbereich 40 des Trägers durchsetzen, mit entsprechenden Aufnahmen des Mantelrohrs 54 verbunden werden.

Um die bisher beschriebenen, in Figur 1 linker Hand des Lenkrads 30 dargestellten Bauteile zu schützen, sind ein oberes Lenkstockgehäuse 62 und ein unteres Lenkstockgehäuse 64 vorgesehen.

Die Baugruppe 2 lässt sich besonders einfach montieren. Dies liegt auch daran, dass zu ihrer Montage im Wesentlichen nur zwei Fügerichtungen erforderlich sind. Dies ist zum einen die Fügerichtung 66, die koaxial zur Lenkachse des Lenkrads 30 verläuft und zum anderen die Fügerichtung 68, die hierzu senkrecht verläuft.

Figur 2 zeigt einen Ausschnitt der montierten Baugruppe 2. Es ist zu erkennen, dass das Lenkrad 30 eine zentrale Lenkradnabe 70 aufweist, die gegenüber dem Rotorelement 4 drehbar ist. Die Lenkradnabe 70 weist insgesamt drei Zapfenaufnahmen 72 auf, die auch in Figur 3 dargestellt sind. In die Zapfenaufnahmen 72 ragen Zapfen 74, die einstückig mit dem Haltering 24 ausgebildet sind. Der Haltering 24 weist radial außen einen ringförmigen Bund 76 auf. Der Bund 76 gleitet in einem Lagerabschnitt 78, der an dem Oberteil 10 des Schaltergehäuses ausgebildet ist. Weiterhin ist der Bund 76 mit Hilfe des Sicherungsrings 26 in axialer Richtung fixiert. Durch die beschriebene Lagerung kann sich das Lenkrad 30 drehen und über die Zapfen 74 und den Haltering 24 das mit dem Haltering 24 verbundene erste Kodierelement 20 drehen.

Benachbart zu dem ersten Kodierelement 20 ist die Platine 14 innerhalb des Unterteils 8 des Schaltergehäuses angeordnet. Auf dieser ist eine Leuchtdiode 80 angeordnet, die Licht über das lichtleitende Element 22 zurück in Richtung auf einen Lichtempfänger 82 leitet, der ebenfalls an der Platine 14 angeordnet ist. Der zwischen dem lichtleitenden Element 22 und dem Lichtempfänger 82 gebildete Freiraum kann von den Kodierungen (die bspw. als segmentförmige Durchbrüche ausgestaltet sein können) des ersten Kodierelements 20 durchstrichen werden, so dass in Abhängigkeit der Drehwinkelstellung des Lenkrads 30 der Lichtempfänger 82 entsprechende Lichtsignale empfängt.

Parallel zu dem ersten Kodierelement 20 ist das zweite Kodierelement 18 angeordnet, dessen Kodierungen (die bspw. als segmentförmige Durchbrüche ausgestaltet sein können) ebenfalls den Lichtstrahl zwischen dem lichtleitenden Element 22 und dem Lichtempfänger 82 herstellen oder unterbrechen können. Das zweite Kodierelement 18 ist an einem Haltering 84 gelagert, der wiederum drehfest mit dem Rotorelement 4 verbunden ist. Der Haltering 84 weist radial außen eine Verzahnung auf, die mit einer entsprechenden Verzahnung des Umdrehungssensors 16 zusammenwirkt.

Bei Drehung des Rotorelements 4 dreht sich das Getriebeelement 34, das wiederum das Zahnrand 58 antreibt. Dieses ist mit Hilfe einer Schraube 86 mit der Lenkwelle 56 verbunden.

Die Übertragung der Drehbewegung des Lenkrads 30 auf das Rotorelement 4 erfolgt über das elastische Element 6, das auch in Figur 4 dargestellt ist. Das elastische Element 6 weist insgesamt drei biegeelastische Abschnitte 92 auf, die sich in radialer Richtung erstrecken und spielfrei in entsprechenden Nuten 94, die in der Lenkradnabe 70 ausgebildet sind, aufgenommen sind. Bei Drehung des Lenkrads 30 dreht sich die Lenkradnabe 70, wobei über die Nuten 94 die biegeelastischen Abschnitte 92 des elastischen Elements 6 angetrieben werden. Durch die drehfeste Verbindung zwischen dem elastischen Element 6 wird das Rotorelement 4 angetrieben.

Die biegeelastischen Abschnitte 92 erlauben es, dass das Lenkrad 30 und das Rotorelement 4 zueinander einen Winkelversatz aufweisen können, wenn ein entsprechend hohes Drehmoment an dem Lenkrad 30 anliegt. Um das elastische Element vor Überlastungen zu schützen, weist das Rotorelement 4 gemäß Figur 3 an seinem äußeren Umfang einen Nocken 90 auf, der in eine in der Lenkradnabe 70 ausgebildete Nut 88 eingreift. Die Nut 88 ist so groß, dass sich der Nocken 90 um +/- 7° relativ zur Nut 88 verdrehen kann.

Der maximale Winkelversatz von +/- 7° ist größer als der Winkelversatz, der maximal gemessen werden muss; dieser beträgt beispielsweise +/- 4°.

Die Drehbewegung des Lenkrads 30 kann auch direkt, d.h. ohne Verwendung eines elastischen Elements 6, auf das Rotorelement 4 übertragen werden. Für eine solche und auch für die beschriebene Anordnung ergibt sich durch die Zwischenschaltung der Getriebeelemente 34 und 58 eine Drehrichtungsumkehr zwischen dem Lenkrad 30 und der Lenkwelle 56. Diese kann durch eine geeignete Auslegung des nachgeschalteten Lenkgetriebes wiederum umgekehrt werden, bspw. indem die Lenkwelle in Einbaulage von unten her mit der Zahnstange des Lenkgetriebes kämmt.

## Patentansprüche

1. Baugruppe (2) für ein Lenksystem eines Kraftfahrzeugs, mit einem fahrzeugfesten Träger (38), an dem eine Lenkradnabe (70) eines Lenkrads (30) drehbar gelagert ist, **dadurch gekennzeichnet, dass** zur Lagerung der Lenkradnabe (70) des Lenkrads (30) an dem Träger (38) ein Rotorelement (4) vorgesehen ist.

2. Baugruppe (2) nach Anspruch 1, **dadurch gekennzeichnet, dass** das Rotorelement (4) im Wesentlichen hülsenartig ausgebildet ist.

3. Baugruppe (2) nach Anspruch 1 oder 2, **dadurch gekennzeichnet, dass** das Rotorelement (4) und die Lenkradnabe (70) des Lenkrads (30) über ein einen Drehwinkelversatz zulassendes elastisches Element (6) miteinander verbunden sind.

4. Baugruppe (2) nach mindestens einem der vorhergehenden Ansprüche, **dadurch gekennzeichnet, dass** das Rotorelement (4) zur Aufnahme eines Getriebeelements (34) ausgebildet ist, das Teil eines Getriebes zur Übertragung der Drehbewegung des Lenkrads (30) auf eine Lenkwelle (56) ist.

5. Baugruppe (2) nach mindestens einem der vorhergehenden Ansprüche, **dadurch gekennzeichnet, dass** das Lenkrad (30) und/oder die Lenkradnabe (70) drehfest mit einem ersten Kodierelement (20) verbunden ist, das Teil einer Drehwinkelsensoranordnung und/oder Drehmomentsensoranordnung ist.

6. Baugruppe (2) nach mindestens einem der vorhergehenden Ansprüche, **dadurch gekennzeichnet, dass** das Rotorelement (4) zur Aufnahme eines zweiten Kodierelements (18) ausgebildet ist, das Teil einer Drehwinkelsensoranordnung und/oder Drehmomentsensoranordnung ist.

7. Baugruppe (2) nach mindestens einem der vorhergehenden Ansprüche, **dadurch gekennzeichnet, dass** an dem Träger (38) eine Airbageinheit so befestigt ist, dass sie von dem Lenkrad drehentkoppelt ist.

8. Baugruppe (2) nach Anspruch 7, **dadurch gekennzeichnet, dass** die Airbageinheit eine Halteplatte (44) zur Anordnung des Airbags (46) aufweist, die einen Durchbruch für ein freies Ende des Trägers (38) aufweist.

9. Baugruppe (2) nach mindestens einem der vorhergehenden Ansprüche, **dadurch gekennzeichnet, dass** die Baugruppe (2) eine Lenkstockschaltereinheit umfasst, die mindestens einen Lenkstockschalter (12) und ein Schaltergehäuse (8, 10) aufweist.

10. Baugruppe (2) nach Anspruch 9, **dadurch gekennzeichnet, dass** das Schaltergehäuse (8, 10) zur Aufnahme einer Steuerplatine (14) und/oder einer Wickelfeder ausgebildet ist.

11. Baugruppe (2) nach mindestens einem der Ansprüche 9 oder 10, **dadurch gekennzeichnet, dass** das Schaltergehäuse (8, 10) und/oder die Steuerplatine (14) zur Aufnahme zur Aufnahme von ortsfesten Sensoren (16, 80) eines Drehmomentsensors und/oder eines Drehwinkelsensors ausgebildet ist.

12. Baugruppe (2) nach mindestens einem der Ansprüche 9 bis 11, **dadurch gekennzeichnet, dass** das Schaltergehäuse (8, 10) an einem karosseriefesten Bauteil positioniert und gegen Verdrehen gesichert ist.

13. Baugruppe (2) nach mindestens einem der Ansprüche 9 bis 11, **dadurch gekennzeichnet, dass** das Schaltergehäuse (8, 10) zumindest mittelbar durch das Rotorelement (4) und/oder durch die Lenkradnabe (70) und/oder durch das Lenkrad (30) positioniert ist und an einem karosseriefesten Bauteil gegen Verdrehen gesichert ist.

14. Baugruppe (2) nach Anspruch 12 oder 13, **dadurch gekennzeichnet, dass** das karosseriefeste Bauteil durch den Träger (38) und/oder durch ein die Lenkwelle (56) umgebendes Mantelrohr (58) gebildet ist.

15. Baugruppe (2) nach mindestens einem der vorhergehenden Ansprüche, **dadurch gekennzeichnet, dass** die Baugruppe (2) einen Antrieb umfasst, das das Rotorelement (4) antreibt.

16. Baugruppe (2) nach mindestens einem der vorhergehenden Ansprüche, **dadurch gekennzeichnet, dass** die Baugruppe (2) für ein Steer-By-Wire Lenksystem vorgesehen ist.

17. Verfahren zur Montage einer Baugruppe (2) für ein Lenksystem eines Kraftfahrzeugs, insbesondere für eine Baugruppe (2) nach mindestens einem der vorhergehenden Ansprüche, umfassend die folgenden Schritte:
- es wird eine erste Montagegruppe (28) gebildet, indem eine Lenkstockschaltereinheit (8 bis 22) und/oder mindestens ein Kodierelement (20, 18) einer Drehwinkelsensoranordnung und/oder einer Drehmomentsensoranordnung mit einem Rotorelement (4) gefügt werden,
- eine weitere Montagegruppe, mindestens umfassend ein Lenkrad (30), wird mit der ersten Montagegruppe (28) und/oder dem Rotorelement (4) gefügt,
- das Rotorelement (4) mit den Montagegruppen wird mit einem fahrzeugfesten Träger (38) gefügt.

18. Verfahren zur Montage einer Baugruppe (2) für ein Lenksystem eines Kraftfahrzeugs, insbesondere für eine Baugruppe nach mindestens einem der Ansprüche 1 bis 16, umfassend die folgenden Schritte:
- es wird eine Montagegruppe (28) gebildet, indem eine Lenkstockschaltereinheit (8 bis 22) und/oder mindestens ein Kodierelement (20, 18) einer Drehwinkelsensoranordnung und/oder einer Drehmomentsensoranordnung mit einem Rotorelement (4) gefügt werden,
- das Rotorelement (4) mit der Montagegruppe (28) wird mit einem fahrzeugfesten Träger (38) gefügt,
- eine weitere Montagegruppe, mindestens umfassend ein Lenkrad (30), wird mit der ersten Montagegruppe und/oder dem Rotorelement (4) gefügt.

19. Verfahren zur Montage einer Baugruppe (2) nach Anspruch 17 oder 18, **dadurch gekennzeichnet, dass** das Rotorelement (4) mit einem Getriebeelement (34) gefügt wird.

20. Verfahren zur Montage einer Baugruppe (2) nach mindestens einem der Ansprüche 17 bis 19, **dadurch gekennzeichnet, dass** eine Airbageinheit in das Lenkrad (30) eingesetzt und mit dem fahrzeugfesten Träger (38) gefügt wird.

21. Verfahren zur Montage einer Baugruppe (2) nach mindestens einem der Ansprüche 17 bis 20, **dadurch gekennzeichnet, dass** die gemäß mindestens einem dieser Ansprüche gebildete Baugruppe (2) mit einem Getriebe zur Übertragung der Drehbewegung des Lenkrads (30) auf eine Lenkwelle (56) gefügt wird.
